# FASCICULE DE BREVET EUROPEEN

(11) **EP 3 305 579 B1**
(45) Date de publication et mention de la délivrance du brevet: **09.12.2020**
(21) Numéro de dépôt: 17194962.1
(22) Date de dépôt: 05.10.2017
(51) Int. Cl.: B60L 3/00, B60L 9/00

(54) **DISPOSITIF DE COMPENSATION ACTIVE D'UN CHAMP MAGNÉTIQUE GÉNÉRÉ PAR UN VÉHICULE FERROVIAIRE DESTINÉ À CIRCULER SUR UNE VOIE FERRÉE**
VORRICHTUNG ZUR AKTIVEN KOMPENSIERUNG EINES MAGNETFELDS, DAS DURCH EIN SCHIENENFAHRZEUG ERZEUGT WIRD, DAS DAZU BESTIMMT IST, AUF EINEM BAHNGLEIS ZU FAHREN
A DEVICE FOR ACTIVE COUNTERBALANCE OF A MAGNETIC FIELD GENERATED BY A RAILWAY VEHICLE INTENDED TO CIRCULATE ON A RAILWAY

(30) Priorité: 06.10.2016 FR 1659641
(43) Date de publication de la demande: 11.04.2018
(73) Titulaire: ALSTOM Transport Technologies, 93400 Saint-Ouen (FR)
(72) Inventeur: LE-BOULVAIS, Yannick, 78760 Marly-Le-Roi (FR); ALILOU, Oussama, 95100 Argenteuil (FR); DE-CHEVRON-VILLETTE, Matthieu, 75017 Paris (FR)
(74) Mandataire: Lavoix

(56) Documents cités:
- EP-A1- 2 773 010
- US-A1- 2008 314 279

## Description

La présente invention concerne un dispositif de compensation d'un champ magnétique généré par un véhicule ferroviaire destiné à circuler sur une voie ferrée, notamment un tramway. Le document EP 2 773 010 A1 divulgue un générateur d'énergie électrique disposé à proximité d'une voie ferrée sur laquelle circulent des véhicules électriques. Ce générateur permet de fournir de l'électricité à partir du rayonnement magnétique généré par une boucle qui comprend les véhicules eux-mêmes sur la ou les boucles conductrices du générateur, lors du passage des véhicules ou trains électriques. Le document US 2008/314279 A1 divulgue un dispositif de protection d'un véhicule terrestre contre les mines à détection magnétique, caractérisé en ce qu'il comporte au moins une boucle disposée sous le véhicule, dans laquelle on fait circuler un courant de sorte à générer un champ magnétique de valeur sensiblement égale et de signe opposé au champ magnétique issu du véhicule.

Le champ magnétique terrestre est sensiblement constant localement. Toutefois, un véhicule ferroviaire alimenté en courant électrique continu génère son propre champ magnétique, qui peut ainsi causer des variations locales non négligeables au champ magnétique terrestre, jusqu'à une distance d'environ 10 mètres de la voie ferrée.

Certains équipements, tels que des équipements d'imagerie par résonnance magnétique dans des hôpitaux, ou des microscopes électroniques à balayage, sont sensibles à de telles variations de champ magnétique. Ainsi, lorsque de tels équipements sont agencés à proximité de la voie ferrée, le passage du véhicule ferroviaire peut nuire au bon fonctionnement de ces équipements. De tels équipements seront appelés « équipements sensibles » dans la suite de la description.

Ce problème est particulièrement pertinent en ville, où des tramways peuvent par exemple passer à proximité d'hôpitaux.

L'invention a notamment pour but de remédier à cet inconvénient, en fournissant un dispositif de compensation du champ magnétique généré par le véhicule ferroviaire, limitant les variations de champ magnétique terrestre à proximité de la voie ferrée.

A cet effet, l'invention a notamment pour objet un dispositif de compensation d'un champ magnétique généré par un véhicule ferroviaire destiné à circuler sur une voie ferrée, notamment un tramway, caractérisé en ce qu'il comporte :
- au moins deux boucles électriquement conductrices, destinées à être agencées latéralement de part et d'autre du véhicule,
- des moyens de mesure de champ magnétique en dehors du véhicule, à proximité de ce véhicule,
- des moyens de localisation du véhicule sur la voie ferrée,
- des moyens de circulation, propres à faire circuler un courant électrique dans chaque boucle, et
- des moyens de détermination d'une intensité de courant électrique à faire circuler dans chaque boucle, au moins en fonction de la position du véhicule sur la voie ferrée et du champ magnétique mesuré en dehors du véhicule.

Le dispositif de compensation selon l'invention permet une compensation active du champ magnétique généré par le véhicule ferroviaire, en faisant circuler un courant électrique dans chaque boucle pour générer un champ magnétique opposé. Ainsi, la variation de champ magnétique terrestre due au passage du véhicule ferroviaire peut être maintenue en dessous d'une valeur prédéfinie.

La compensation effectuée selon l'invention est active, car les courants électriques passant dans les boucles sont déterminés et modifiés en temps réel.

Un dispositif de compensation selon l'invention peut comporter en outre l'une ou plusieurs des caractéristiques suivantes, prises seules ou selon toutes combinaisons techniquement envisageables.
- Les moyens de détermination déterminent l'intensité de courant électrique également en fonction du courant de traction appelé par le véhicule ferroviaire.
- Chaque boucle comporte une pluralité de spires, notamment au moins une centaine de spires.
- Le dispositif de compensation équipe un véhicule ferroviaire comportant au moins deux voitures, et comporte deux boucles pour au moins l'une des voitures, destinées à être agencées latéralement de part et d'autre de cette voiture.
- Chaque boucle est dimensionnée pour s'étendre sensiblement le long d'un contour d'une paroi latérale de la voiture correspondante.
- Les moyens de circulation sont configurés pour faire circuler, dans chaque boucle, un courant électrique spécifique à cette boucle.
- Les moyens de mesure de champ magnétique comportent au moins un premier capteur destiné à être porté par le véhicule.
- Les moyens de mesure de champ magnétique comportent au moins un second capteur destiné à être agencé le long de la voie ferrée.
- Les moyens de détermination comportent un calculateur, dans lequel est stockée au moins une fonction de transfert, et les moyens de circulation comportent un amplificateur propre à faire varier l'intensité du courant circulant dans les boucles.

L'invention concerne également un procédé de compensation active d'un champ magnétique généré par un véhicule ferroviaire destiné à circuler sur une voie ferrée, notamment un tramway, caractérisé en ce qu'il est mis en œuvre au moyen d'un dispositif de compensation tel que défini précédemment, en en ce qu'il comporte :
- la localisation du véhicule sur la voie ferrée,
- la mesure d'un champ magnétique en dehors du véhicule, à proximité de ce véhicule,
- la détermination d'une intensité de courant électrique à faire circuler dans chaque boucle, au moins en fonction de la position du véhicule sur la voie ferrée et du champ magnétique mesuré en dehors du véhicule, et
- la circulation d'un courant électrique dans chaque boucle, avec une intensité déterminé lors de ladite détermination.

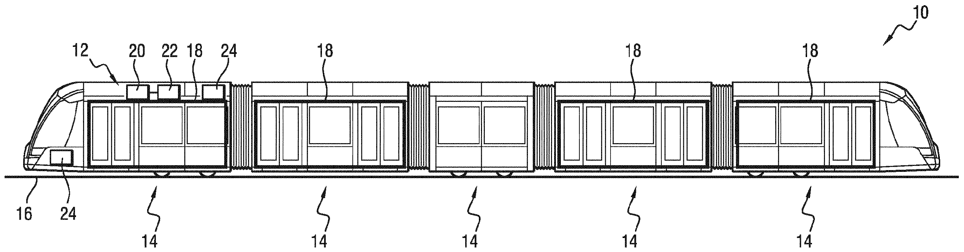

L'invention sera mieux comprise à la lecture de la description qui va suivre, donnée uniquement à titre d'exemple et faite en se référant à la figure annexée représentant schématiquement un véhicule ferroviaire comprenant un dispositif de compensation selon un exemple de mode de réalisation de l'invention.

On a représenté, sur la figure, un véhicule ferroviaire 10, comprenant un dispositif de compensation 12 selon un exemple de mode de réalisation de l'invention.

Dans l'exemple représenté, le véhicule ferroviaire 10 est un tramway. Ce véhicule ferroviaire 10 comporte au moins deux voitures 14, et plus particulièrement cinq voitures 14. Par exemple, le véhicule ferroviaire 10 comporte deux voitures d'extrémité, chacune disposée à une extrémité du véhicule 10 et comprenant chacune une cabine de conducteur, une voiture centrale motrice comprenant au moins un pantographe, et deux voitures intermédiaires, chacune disposée entre l'une respective des voitures d'extrémité et la voiture centrale. Bien entendu, le véhicule ferroviaire 10 pourrait en variante présenter un nombre différent de voitures, et/ou une structure générale différente.

Le véhicule ferroviaire 10 est destiné à circuler sur une voie ferrée 16. Par exemple, dans le cas d'un tramway, la voie ferrée 16 passe par une ville.

Certains équipements sensibles aux variations de champ magnétique peuvent être présents dans cette ville, à proximité de la voie ferrée 16, notamment à moins de dix mètres de cette voie ferrée 16. Le dispositif de compensation 12 est destiné à limiter de telles variations de champ magnétique, afin que le passage du véhicule ferroviaire 10 ne perturbe pas le fonctionnement de ces équipements sensibles.

Le dispositif de compensation 12 comporte au moins deux boucles 18 électriquement conductrices, agencées latéralement de part et d'autre du véhicule 10.

Plus particulièrement, le dispositif de compensation 12 comporte deux boucles 18 pour au moins l'une des voitures 14, ces boucles 18 étant agencées latéralement de part et d'autre de cette voiture 14.

Dans l'exemple décrit, les voitures d'extrémité et les voitures intermédiaires sont chacune équipée de deux boucles 18, chaque boucle 18 étant agencée sur une paroi latérale de cette voiture. La voiture centrale est dans l'exemple décrit dépourvue de boucle, mais elle pourrait en variante comporter également deux boucles.

Comme cela est représenté sur la figure, chaque boucle 18 est dimensionnée pour s'étendre sensiblement le long d'un contour de paroi latérale de la voiture 14 correspondante. Ainsi, chaque boucle 18 s'étend autour d'un ensemble de portes et fenêtres de cette voiture 14.

Par ailleurs, chaque boucle 18 est avantageusement formée par une pluralité de spires, par exemple au moins une centaine de spires.

Le dispositif de compensation 12 comporte des moyens de circulation 20, propres à faire circuler un courant électrique dans chaque boucle 18. Les moyens de circulation 20 comportent avantageusement au moins un amplificateur, propre à faire varier l'intensité du courant électrique circulant dans chaque boucle 18.

Les moyens de circulation 20 sont avantageusement configurés pour faire circuler, dans chaque boucle 18, un courant électrique spécifique à cette boucle 18.

Lorsqu'un courant électrique circule dans une boucle 18, un champ magnétique est généré de manière classique. L'intensité de ce champ magnétique dépend de l'intensité du courant électrique, et du nombre de spires formant cette boucle 18.

Le dispositif de compensation 12 comporte par ailleurs des moyens 22 de détermination de l'intensité de courant électrique à faire circuler dans chaque boucle 18. Ces moyens de détermination 22 sont destinés à déterminer quelle intensité de courant électrique est adaptée, pour chaque boucle 18, pour compenser le champ magnétique généré par la voiture 14 correspondante.

Afin de déterminer cette intensité de courant électrique, il est donc nécessaire de déterminer le champ magnétique que l'on souhaite compenser.

A cet effet, le dispositif de compensation 12 comporte des moyens 24 de mesure de champ magnétique en dehors du véhicule 10, à proximité de ce véhicule 10.

Par exemple, les moyens de mesure 24 comportent au moins un premier capteur porté par le véhicule 10. En variante, ou de manière complémentaire, les moyens de mesure 24 de champ magnétique comportent au moins un second capteur agencé le long de la voie ferrée 16, notamment à proximité d'équipements sensibles.

Ce champ magnétique mesuré est le champ magnétique compensé, donc la somme du champ magnétique généré par la voiture 14, et du champ magnétique généré par les boucles 18 équipant cette voiture 14.

Ce champ magnétique mesuré doit être inférieur à une valeur prédéfinie. Cette valeur prédéfinie est susceptible de varier le long de la voie ferrée 16. En effet, la valeur prédéfinie doit être suffisamment basse à proximité d'équipements sensibles, afin de ne pas perturber le fonctionnement de ces équipements. En revanche, la valeur prédéfinie peut être plus élevée en l'absence d'équipement sensible à proximité. On peut par exemple envisager de n'effectuer une compensation qu'à proximité d'équipements sensibles.

Ainsi, le dispositif de compensation 12 comporte des moyens 26 de localisation du véhicule 10 sur la voie ferrée 16. Ces moyens de localisation 26 sont configurés pour connaître également la position des équipements sensibles. Ainsi, les moyens de détermination 22 sont configurés pour prendre en compte la position du véhicule 10, notamment vis-à-vis de la position des équipements sensibles, afin de déterminer à tout moment la valeur prédéfinie que le champ magnétique compensé ne doit pas dépasser.

Les moyens de détermination 22 déterminent alors, pour chaque boucle 18, l'intensité de courant électrique à faire circuler dans cette boucle 18, au moins en fonction de la position du véhicule 10 sur la voie ferrée 16 et du champ magnétique mesuré en dehors du véhicule 10, par les moyens de mesure 24.

Avantageusement, les moyens de détermination 22 déterminent l'intensité du courant électrique également en fonction du courant de traction appelé par le véhicule ferroviaire 10. En effet, ce courant de traction influe sur le champ magnétique généré par le véhicule ferroviaire 10.

Les moyens de détermination 22 sont également avantageusement configurés pour prendre en compte le type de véhicule ferroviaire 10 employé, notamment sa structure.

Par exemple, les moyens de détermination 22 comportent un calculateur, dans lequel est stockée au moins une fonction de transfert.

Les fonctions de transfert comportent, en entrée, la position du véhicule, la valeur du champ magnétique mesuré par les moyens de mesure 24, et/ou le courant de traction appelé par le véhicule ferroviaire 10, et, en sortie, une consigne d'intensité à destination des moyens de circulation 20.

Le dispositif de compensation 12 permet la mise en œuvre d'un procédé de compensation active du champ magnétique généré par le véhicule ferroviaire 10, qui va maintenant être décrit.

Le procédé de compensation est mis en œuvre en temps réel, afin d'adapter à tout moment la compensation du champ magnétique, notamment en fonction de la position du véhicule 10.

Ainsi, le procédé de compensation comporte tout d'abord la localisation du véhicule 10 sur la voie ferrée 16, notamment afin de déterminer si des équipements sensibles sont à proximité. La valeur prédéfinie en dessous de laquelle doit se trouver le champ magnétique compensé est ainsi déterminée, en fonction de cette localisation.

Le procédé de compensation comporte ensuite la mesure du champ magnétique en dehors du véhicule 10, à proximité de ce véhicule 10.

Le procédé de compensation comporte ensuite la détermination d'une intensité de courant électrique à faire circuler dans chaque boucle 18, notamment en fonction du champ magnétique mesuré en dehors du véhicule 10, afin de faire passer ce champ magnétique compensé en dessous de la valeur prédéfinie.

Une consigne d'intensité est alors fournie aux moyens de circulation 20. Le procédé comporte alors la circulation d'un courant électrique dans chaque boucle 18, avec cette intensité, déterminé lors de ladite détermination.

Il est à noter que chaque boucle 18 est alimentée avec une intensité spécifique, pouvant varier d'une boucle à l'autre.

Il apparaît clairement que le dispositif de compensation 12 selon l'invention permet de réaliser une compensation active du champ magnétique généré par le véhicule ferroviaire 10.

On notera que l'invention n'est pas limitée au mode de réalisation précédemment décrit, mais pourrait présenter diverses variantes complémentaires.

## Revendications

1. Dispositif (12) de compensation d'un champ magnétique généré par un véhicule ferroviaire (10) destiné à circuler sur une voie ferrée (16), notamment un tramway, **caractérisé en ce qu'**il comporte :
- au moins deux boucles (18) électriquement conductrices, destinées à être agencées latéralement de part et d'autre du véhicule (10),
- des moyens (24) de mesure de champ magnétique en dehors du véhicule (10), à proximité de ce véhicule (10),
- des moyens (26) de localisation du véhicule (10) sur la voie ferrée (16),
- des moyens (20) de circulation, propres à faire circuler un courant électrique dans chaque boucle (18), et
- des moyens (22) de détermination d'une intensité de courant électrique à faire circuler dans chaque boucle (18), au moins en fonction de la position du véhicule (10) sur la voie ferrée (16) et du champ magnétique mesuré en dehors du véhicule (10).

2. Dispositif de compensation (12) selon la revendication 1, dans lequel les moyens de détermination (22) déterminent l'intensité de courant électrique également en fonction du courant de traction appelé par le véhicule ferroviaire (10).

3. Dispositif de compensation (12) selon la revendication 1 ou 2, dans lequel chaque boucle (18) comporte une pluralité de spires, notamment au moins une centaine de spires.

4. Dispositif de compensation (12) selon l'une quelconque des revendications 1 à 3, pour un véhicule ferroviaire (10) comportant au moins deux voitures (14), le dispositif de compensation (12) comportant deux boucles (18) pour au moins l'une des voitures (14), destinées à être agencées latéralement de part et d'autre de cette voiture (14).

5. Dispositif de compensation (12) selon la revendication 4, dans lequel chaque boucle (18) est dimensionnée pour s'étendre sensiblement le long d'un contour d'une paroi latérale de la voiture (14) correspondante.

6. Dispositif de compensation (12) selon l'une quelconque des revendications précédentes, dans lequel les moyens de circulation (20) sont configurés pour faire circuler, dans chaque boucle (18), un courant électrique spécifique à cette boucle (18).

7. Dispositif de compensation (12) selon l'une quelconque des revendications précédentes, dans lequel les moyens (24) de mesure de champ magnétique comportent au moins un premier capteur destiné à être porté par le véhicule (10).

8. Dispositif de compensation (12) selon l'une quelconque des revendications précédentes, dans lequel les moyens (24) de mesure de champ magnétique comportent au moins un second capteur destiné à être agencé le long de la voie ferrée (16).

9. Dispositif de compensation (12) selon l'une quelconque des revendications précédentes, dans lequel les moyens de détermination (22) comportent un calculateur, dans lequel est stockée au moins une fonction de transfert, et les moyens de circulation (20) comportent un amplificateur propre à faire varier l'intensité du courant circulant dans les boucles (18).

10. Procédé de compensation active d'un champ magnétique généré par un véhicule ferroviaire (10) destiné à circuler sur une voie ferrée (16), notamment un tramway, **caractérisé en ce qu'**il est mis en œuvre au moyen d'un dispositif de compensation (12) selon l'une quelconque des revendications 1 à 9, et **en ce qu'**il comporte :
- la localisation du véhicule (10) sur la voie ferrée (16),
- la mesure d'un champ magnétique en dehors du véhicule (10), à proximité de ce véhicule (10),
- la détermination d'une intensité de courant électrique à faire circuler dans chaque boucle (18), au moins en fonction de la position du véhicule (10) sur la voie ferrée (16) et du champ magnétique mesuré en dehors du véhicule (10), et
- la circulation d'un courant électrique dans chaque boucle (18), avec une intensité déterminé lors de ladite détermination.

## Patentansprüche

1. Vorrichtung (12) zur Kompensation eines Magnetfelds, das erzeugt wird durch ein Schienenfahrzeug (10), das dazu bestimmt ist, auf einem Bahngleis (16) zu fahren, insbesondere eine Tram, **dadurch gekennzeichnet, dass** sie aufweist:
- wenigstens zwei elektrisch leitende Schleifen (18), die dazu bestimmt sind, seitlich beiderseits des Fahrzeugs (10) angeordnet zu sein,
- Mittel (24) zum Messen eines Magnetfelds außerhalb des Fahrzeugs (10) in der Nähe dieses Fahrzeugs (10),
- Mittel (26) zur Lokalisierung des Fahrzeugs (10) auf dem Bahngleis (16),
- Stromfluss-Mittel (20), die imstande sind, einen elektrischen Strom in jeder Schleife (18) fließen zu lassen, und
- Mittel (22) zur Bestimmung einer Stärke des elektrischen Stroms, der in jeder Schleife (18) fließen soll, zumindest in Abhängigkeit von der Position des Fahrzeugs (10) auf dem Bahngleis (16) und von dem Magnetfeld, das außerhalb des Fahrzeugs (10) gemessen wird.

2. Vorrichtung zur Kompensation (12) gemäß Anspruch 1, wobei die Mittel zur Bestimmung (22) die Stärke des elektrischen Stroms bestimmen auch in Abhängigkeit von dem Antriebsstrom, der auf das Schienenfahrzeug (10) aufgebracht wird.

3. Vorrichtung zur Kompensation (12) gemäß Anspruch 1 oder 2, wobei jede Schleife (18) eine Mehrzahl von Windungen aufweist, insbesondere wenigstens etwa hundert Windungen.

4. Vorrichtung zur Kompensation (12) gemäß irgendeinem der Ansprüche 1 bis 3, für ein Schienenfahrzeug (10), das wenigstens zwei Wagen (14) aufweist, wobei die Vorrichtung zur Kompensation (12) aufweist zwei Schleifen (18) für wenigstens einen der Wagen (14), die dazu bestimmt sind, seitlich beiderseits dieses Wagens (14) angeordnet zu sein.

5. Vorrichtung zur Kompensation (12) gemäß Anspruch 4, wobei jede Schleife (18) dimensioniert ist, um sich im Wesentlichen entlang einer Kontur einer Seitenwand des korrespondierenden Wagens (14) zu erstrecken.

6. Vorrichtung zur Kompensation (12) gemäß irgendeinem der vorhergehenden Ansprüche, wobei die Stromfluss-Mittel (20) konfiguriert sind, um in jeder Schleife (18) einen elektrischen Strom fließen zu lassen, der für diese Schleife (18) spezifisch ist.

7. Vorrichtung zur Kompensation (12) gemäß irgendeinem der vorhergehenden Ansprüche, wobei die Mittel (24) zum Messen eines Magnetfelds wenigstens einen ersten Sensor aufweisen, der dazu bestimmt ist, von dem Fahrzeug (10) getragen zu werden.

8. Vorrichtung zur Kompensation (12) gemäß irgendeinem der vorhergehenden Ansprüche, wobei die Mittel (24) zum Messen eines Magnetfelds wenigstens einen zweiten Sensor aufweisen, der dazu bestimmt ist, entlang des Bahngleises (16) angeordnet zu sein.

9. Vorrichtung zur Kompensation (12) gemäß irgendeinem der vorhergehenden Ansprüche, wobei die Mittel zur Bestimmung (22) aufweisen einen Rechner, in welchem wenigstens eine Übertragungsfunktion gespeichert ist, und wobei die Stromfluss-Mittel (20) einen Verstärker aufweisen, der imstande ist, die Stärke des Stroms, der in den Schleifen (18) fließt, variieren zu lassen.

10. Verfahren zur aktiven Kompensation eines Magnetfelds, das erzeugt wird durch ein Schienenfahrzeug (10), das dazu bestimmt ist, auf einem Bahngleis (16) zu fahren, insbesondere eine Tram, **dadurch gekennzeichnet, dass** es mittels einer Vorrichtung (12) gemäß irgendeinem der Ansprüche 1 bis 9 durchgeführt wird, und dass es aufweist:
- das Lokalisieren des Fahrzeugs (10) auf dem Bahngleis (16),
- das Messen eines Magnetfelds außerhalb des Fahrzeugs (10) in der Nähe dieses Fahrzeugs (10),
- das Bestimmen einer Stärke des elektrischen Stroms, der in jeder Schleife (18) fließen soll, zumindest in Abhängigkeit von der Position des Fahrzeugs (10) auf dem Bahngleis (16) und dem Magnetfeld, das außerhalb des Fahrzeugs (10) gemessen wird, und
- das Fließen-Lassen eines elektrischen Stroms in jeder Schleife (18) mit einer Stärke, die anlässlich des besagten Bestimmens bestimmt wurde.

## Claims

1. Device (12) for compensating for a magnetic field generated by a railway vehicle (10) intended to travel on a railway track (16), in particular a tramway, **characterised in that** it comprises:
- at least two electrically conductive loops (18) intended to be arranged laterally on both sides of the vehicle (10),
- means (24) for measuring the magnetic field outside the vehicle (10), close to said vehicle (10),
- means (26) for locating the vehicle (10) on the railway track (16),
- flow means (20 suitable for causing an electric current to flow in each loop (18), and
- means (22) for determining an intensity of electric current to flow in each loop (18), at least on the basis of the position of the vehicle (10) on the railway track (16) and of the magnetic field measured outside the vehicle (10).

2. Compensation device (12) according to claim 1, wherein the determining means (22) also determine the intensity of the electric current on the basis of the traction current drawn by the railway vehicle (10).

3. Compensation device (12) according to either claim 1 or claim 2, wherein each loop (18) comprises a plurality of turns, in particular at least a hundred turns.

4. Compensation device (12) according to any of claims 1 to 3, for a railway vehicle (10) comprising at least two carriages (14), the compensation device (12) comprising two loops (18) for at least one of the carriages (14), which loops are intended to be arranged laterally on both sides of this carriage (14).

5. Compensation device (12) according to claim 4, wherein each loop (18) is dimensioned so as to extend substantially along a contour of a lateral wall of the corresponding carriage (14).

6. Compensation device (12) according to any of the preceding claims, wherein the flow means (20) are configured to cause, in each loop (18), an electric current which is specific to this loop (18) to flow.

7. Compensation device (12) according to any of the preceding claims, wherein the means (24) for measuring the magnetic field comprise at least one first sensor intended to be carried by the vehicle (10).

8. Compensation device (12) according to any of the preceding claims, wherein the means (24) for measuring the magnetic field comprise at least one second sensor intended to be arranged along the railway track (16).

9. Compensation device (12) according to any of the preceding claims, wherein the determination means (22) comprise a computer in which at least one transfer function is stored, and the flow means (20) comprise an amplifier suitable for varying the intensity of the current flowing in the loops (18).

10. Method for actively compensating for a magnetic field generated by a railway vehicle (10) intended to travel on a railway track (16), in particular a tramway, **characterised in that** it is implemented by means of a compensation device (12) according to any of claims 1 to 9, and **in that** it comprises:
- locating the vehicle (10) on the railway track (16),
- measuring a magnetic field outside the vehicle (10), close to said vehicle (10),
- determining an intensity of electric current to flow in each loop (18), at least on the basis of the position of the vehicle (10) on the railway track (16) and of the magnetic field measured outside the vehicle (10), and
- causing an electric current to flow in each loop (18) with an intensity determined during said determination.
